# EUROPEAN PATENT APPLICATION

(11) **EP 4 786 258 A1**
(43) Date of publication of application: **05.08.2026**
(21) Application number: 24869726.0
(22) Date of filing: 10.05.2024
(51) Int. Cl.: B60L 53/16, B60L 53/302, H01R 13/62, H01R 13/627, H01R 13/629

(54) **UNDER-VEHICLE CONNECTION GUN, ON-VEHICLE CONNECTION SOCKET, AND LIQUID COOLING APPARATUS**

(30) Priority: 30.09.2023 CN 202311295873
(71) Applicant: Huawei Digital Power Technologies Co., Ltd., Shenzhen, Guangdong 518043 (CN)
(72) Inventor: CHENG, Dong, Shenzhen, Guangdong 518043 (CN); HU, Minggui, Shenzhen, Guangdong 518043 (CN); LIN, Quanxi, Shenzhen, Guangdong 518043 (CN)
(74) Representative: Maiwald GmbH
(86) International application number: PCT/CN2024/092462
(87) International publication number: WO 2025/066158

(57) **Abstract**

An off-vehicle charger (100), an on-vehicle connection socket (200), and a liquid cooling apparatus are provided. The off-vehicle charger (100) is configured to connect, in an insertion manner, to the on-vehicle connection socket (200) disposed on a vehicle (1). The off-vehicle charger (100) includes an insertion end, the insertion end includes a liquid supply plug (103) and a liquid return plug (104), and the liquid supply plug (103) and the liquid return plug (104) are connected to a liquid cooling unit (2) through a pipeline. The insertion end further includes a first connection confirmation terminal (102), one end of the first connection confirmation terminal (102) is configured to connect to a first connection confirmation socket (202) of the on-vehicle connection socket (200), and the other end of the first connection confirmation terminal (102) is configured to connect to a first connection confirmation circuit. When the first connection confirmation terminal (102) is connected to the first connection confirmation socket (202), the first connection confirmation circuit and a connection confirmation circuit connected to the first connection confirmation socket (202) form a first connection confirmation loop, and the first connection confirmation loop is configured to confirm a connection status between the liquid supply plug (103) and the on-vehicle connection socket (200) and a connection status between the liquid return plug (104) and the on-vehicle connection socket (200). The liquid cooling unit (2) can be used to improve a heat dissipation capability of a battery management system for a power battery of the vehicle (1), to meet a heat dissipation requirement of battery supercharging.

## Description

### CROSS-REFERENCE TO RELATED APPLICATIONS

This application claims priority to Chinese Patent Application No. 202311295873.5, filed with the China National Intellectual Property Administration on September 30, 2023 and entitled "OFF-VEHICLE CHARGER, ON-VEHICLE CONNECTION SOCKET, AND LIQUID COOLING APPARATUS", which is incorporated herein by reference in its entirety.

### TECHNICAL FIELD

This application relates to the field of vehicles, and in particular, to an off-vehicle charger, an on-vehicle connection socket, and a liquid cooling apparatus.

### BACKGROUND

There are two main energy supplement manners for an electric vehicle: charging and battery swapping (swapping batteries). Usually, the charging solution takes 1 to 2 hours to fully charge a power battery due to its charging speed, which cannot meet a rapid energy supplement requirement of the electric vehicle. In contrast, the battery swapping solution is favored by some passenger vehicles and heavy trucks. However, current electric vehicle battery swap stations serve vehicle models of only a single or several brands, covering a limited quantity of groups. In addition, the battery swap stations require a high investment for construction, making it difficult for their operators to earn operating profits from them and costly for users to use them.

With a breakthrough of the 3C or higher-rate battery technology, high-rate supercharging can be achieved in a lithium battery at a greatly increased charging speed. However, high-rate supercharging imposes a higher requirement on a battery management system, which is required to quickly dissipate heat generated during supercharging. Improving a heat dissipation capability of the battery management system of the vehicle for the battery requires high costs. In addition, the improvement can take effect only during charging, and is redundant in other working conditions, resulting in an increase in the weight of the entire vehicle and higher energy consumption.

### SUMMARY

This application provides an off-vehicle charger, an on-vehicle connection socket, and a liquid cooling apparatus, to improve a heat dissipation capability for a battery of a vehicle during supercharging of the battery.

According to a first aspect, this application provides an off-vehicle charger. The off-vehicle charger is configured to connect, in an insertion manner, to an on-vehicle connection socket disposed on a vehicle. The off-vehicle charger includes an insertion end, the insertion end is configured to be inserted into the on-vehicle connection socket in an insertion direction, the insertion end includes a liquid supply plug and a liquid return plug, the liquid supply plug and the liquid return plug are connected to a liquid cooling unit through a pipeline, and the liquid cooling unit includes a coolant. The insertion end further includes a first connection confirmation terminal, one end of the first connection confirmation terminal is configured to connect to a first connection confirmation socket of the on-vehicle connection socket, and the other end of the first connection confirmation terminal is configured to connect to a first connection confirmation circuit. When the first connection confirmation terminal is connected to the first connection confirmation socket, the first connection confirmation circuit and a connection confirmation circuit connected to the first connection confirmation socket form a first connection confirmation loop, and the first connection confirmation loop is configured to confirm a connection status between the liquid supply plug and the on-vehicle connection socket and a connection status between the liquid return plug and the on-vehicle connection socket.

In the technical solution provided in this application, when the off-vehicle charger is inserted into the on-vehicle connection socket, a liquid cooling unit may communicate with the coolant pipeline of the battery management system. When the first connection confirmation terminal of the off-vehicle charger is connected to the first connection confirmation socket of the on-vehicle connection socket, the coolant may be transmitted between the liquid cooling unit and the coolant pipeline of the battery management system, and the liquid cooling unit may assist the battery management system in heat dissipation of a power battery of the vehicle. In this way, the off-vehicle liquid cooling unit is used to improve a heat dissipation capability of the on-vehicle battery management system for the power battery of the vehicle, to meet a heat dissipation requirement of battery supercharging. As the off-vehicle charger provided in this application is used, a heat dissipation requirement during supercharging of the battery of the vehicle can be met without upgrading and reconstructing the on-vehicle battery management system or by upgrading and reconstructing the on-vehicle battery management system to a small extent. This can reduce costs of upgrading and reconstructing the on-vehicle battery management system, and avoid, to a large extent, a waste of resources caused by upgrading and reconstructing the on-vehicle battery management system when the battery is not charged, and almost does not increase a weight of the entire vehicle and does not increase energy consumption of the vehicle.

In a specific implementation solution, the liquid supply plug includes a sleeve and a piston pipe, and the sleeve and the piston pipe are sleeved in the insertion direction. The piston pipe is of a hollow tubular structure, a first end of the piston pipe includes an opening, a second end of the piston pipe is closed, the first end of the piston pipe is configured to connect to the on-vehicle connection socket, a side wall of the piston pipe that is close to the second end of the piston pipe includes a through hole, and the through hole is configured to communicate the pipeline with the piston pipe. The piston pipe and the sleeve are movable relative to each other in the insertion direction; and when the off-vehicle charger is not connected to the on-vehicle connection socket, the sleeve closes the through hole, to disconnect the communication between the pipeline and the piston pipe; or when the off-vehicle charger is connected to the on-vehicle connection socket, the sleeve avoids the through hole, to communicate the pipeline with the piston pipe.

In a specific implementation solution, the off-vehicle charger further includes a first housing, the first housing includes a first end in the insertion direction, the first end of the first housing is configured to connect to the on-vehicle connection socket, and the liquid supply plug and the liquid return plug are separately disposed at the first end of the first housing. The first end of the first housing includes a first positioning through hole, and the first positioning through hole includes a locking portion. When the off-vehicle charger is inserted into the on-vehicle connection socket, the locking portion extends into the on-vehicle connection socket from the first positioning through hole in a vertical direction of the insertion direction, to lock relative positions of the off-vehicle charger and the on-vehicle connection socket.

In a specific implementation solution, the off-vehicle charger further includes an assisting handle structure, the assisting handle structure includes a holding portion, a first connection portion, and a second connection portion, the first connection portion and the second connection portion are respectively connected to two ends of the holding portion, and the first connection portion and the second connection portion are respectively connected to two sides of the off-vehicle charger that are opposite to each other in a vertical direction of the insertion direction.

In a specific implementation solution, the vehicle is provided with an insertion auxiliary structure, the insertion auxiliary structure includes a traction frame extending in the insertion direction and movable in the insertion direction, one end of the traction frame is movably connected to the vehicle, and the other end of the traction frame is provided with an abutting portion. An outer wall of the off-vehicle charger includes a protrusion, the protrusion is disposed close to the insertion end of the off-vehicle charger in the insertion direction, and a projection of the protrusion at least partially overlaps a projection of the abutting portion in the insertion direction. When the off-vehicle charger is connected to the on-vehicle connection socket and the off-vehicle charger is at a first position, the traction frame pulls the off-vehicle charger to move from the first position to a second position, so that the off-vehicle charger is completely connected to the on-vehicle connection socket.

In a specific implementation solution, the off-vehicle charger further includes a signal trigger terminal, the signal trigger terminal is disposed at the insertion end of the off-vehicle charger, and when the off-vehicle charger is at the first position, the signal trigger terminal is electrically connected to a signal trigger terminal of the on-vehicle connection socket. In response to the signal trigger terminal being electrically connected to the signal trigger terminal of the on-vehicle connection socket, the traction frame pulls the off-vehicle charger to move from the first position to the second position, so that the off-vehicle charger is successfully connected to the on-vehicle connection socket.

In a specific implementation solution, the first connection confirmation terminal and the signal trigger terminal are separately located between the liquid supply plug and the liquid return plug in a vertical direction of the insertion direction. The first connection confirmation terminal and the signal trigger terminal are spaced apart in a vertical direction of the insertion direction.

In a specific implementation solution, a length of the first connection confirmation terminal exposed from the insertion end of the off-vehicle charger in the insertion direction is L3, a length of the signal trigger terminal exposed from the insertion end of the off-vehicle charger in the insertion direction is L2, and L3<L2. When the off-vehicle charger is at the first position, the signal trigger terminal is electrically connected to the signal trigger terminal of the on-vehicle connection socket; and when the off-vehicle charger is at the second position, the first connection confirmation terminal is electrically connected to a connection confirmation terminal of the on-vehicle connection socket.

According to a second aspect, this application provides an on-vehicle connection socket. The on-vehicle connection socket is configured to connect to an off-vehicle charger outside a vehicle in an insertion manner. The on-vehicle connection socket includes an insertion end, the insertion end is configured to be inserted into the off-vehicle charger in an insertion direction, the insertion end includes a liquid inlet socket and a liquid outlet socket, the liquid inlet socket and the liquid outlet socket are connected to a coolant pipeline of a battery management system of the vehicle through a pipeline, and the coolant pipeline of the battery management system includes a coolant. The insertion end further includes a first connection confirmation socket, one end of the first connection confirmation socket is configured to connect to a first connection confirmation terminal of the off-vehicle charger, and the other end of the first connection confirmation socket is configured to connect to a third connection confirmation circuit. When the first connection confirmation terminal is connected to the first connection confirmation socket, the third connection confirmation circuit and a connection confirmation circuit connected to the first connection confirmation terminal form a first connection confirmation loop, and the first connection confirmation loop is configured to confirm a connection status between the liquid inlet socket and the off-vehicle charger and a connection status between the liquid outlet socket and the off-vehicle charger.

In the technical solution provided in this application, when the off-vehicle charger is inserted into the on-vehicle connection socket, a liquid cooling unit may communicate with the coolant pipeline of the battery management system. When the first connection confirmation terminal of the off-vehicle charger is connected to the first connection confirmation socket of the on-vehicle connection socket, the coolant may be transmitted between the liquid cooling unit and the coolant pipeline of the battery management system, and the liquid cooling unit may assist the battery management system in heat dissipation of a power battery of the vehicle. In this way, the off-vehicle liquid cooling unit is used to improve a heat dissipation capability of the on-vehicle battery management system for the power battery of the vehicle, to meet a heat dissipation requirement of battery supercharging. As the on-vehicle connection socket provided in this application is used, a heat dissipation requirement during supercharging of the battery of the vehicle can be met without upgrading and reconstructing the on-vehicle battery management system or by upgrading and reconstructing the on-vehicle battery management system to a small extent. This can reduce costs of upgrading and reconstructing the on-vehicle battery management system, and avoid, to a large extent, a waste of resources caused by upgrading and reconstructing the on-vehicle battery management system when the battery is not charged, and almost does not increase a weight of the entire vehicle and does not increase energy consumption of the vehicle.

In a specific implementation solution, the liquid inlet socket includes a sleeve and a piston pipe, and the sleeve and the piston pipe are sleeved in the insertion direction. The piston pipe is of a hollow tubular structure, a first end of the piston pipe includes an opening, a second end of the piston pipe is closed, the first end of the piston pipe is configured to connect to the off-vehicle charger, a side wall of the piston pipe that is close to the second end of the piston pipe includes a through hole, and the through hole is configured to communicate the pipeline with the piston pipe. The piston pipe and the sleeve are movable relative to each other in the insertion direction; and when the off-vehicle charger is not connected to the on-vehicle connection socket, the sleeve closes the through hole, to disconnect the communication between the pipeline and the piston pipe; or when the off-vehicle charger is connected to the on-vehicle connection socket, the sleeve avoids the through hole, to communicate the pipeline with the piston pipe.

In a specific implementation solution, the on-vehicle connection socket further includes a second housing, the second housing includes a first end in the insertion direction, the first end of the second housing is configured to connect to the off-vehicle charger, and the liquid inlet socket and the liquid outlet socket are separately disposed at the first end of the second housing. The first end of the second housing includes a second positioning through hole, and the second positioning through hole includes a locking portion. When the off-vehicle charger is inserted into the on-vehicle connection socket, the locking portion extends into the off-vehicle charger from the second positioning through hole in a vertical direction of the insertion direction, to lock relative positions of the off-vehicle charger and the on-vehicle connection socket.

According to a third aspect, this application provides a liquid cooling apparatus, including a liquid cooling unit and the off-vehicle charger according to any one of the possible implementation solutions of the first aspect. The off-vehicle charger is configured to be inserted into an on-vehicle connection socket, and the liquid supply plug and the liquid return plug are connected to the liquid cooling unit through the pipeline. After the liquid supply plug and the liquid return plug are successfully connected to the on-vehicle connection socket, the liquid cooling unit is configured to output a coolant to a battery management system of the vehicle through the liquid supply plug, to dissipate heat for a battery of the vehicle, and the liquid cooling unit is configured to receive, through the liquid return plug, the coolant output by the battery management system.

In a specific implementation solution, the liquid cooling unit includes a heat exchanger, a coolant tank, and a water pump, and the liquid supply plug and the liquid return plug communicate with at least one of the heat exchanger and the coolant tank through the pipeline. The coolant tank is configured to accommodate the coolant. The heat exchanger is configured to receive the coolant transmitted by the liquid return plug through the pipeline. The water pump is configured to drive the coolant to flow between the liquid supply plug, the liquid return plug, the heat exchanger, and the coolant tank.

According to a fourth aspect, this application provides a composite charger used in a charging device. The composite charger is configured to connect, in an insertion manner, to a composite connection socket disposed on a vehicle. The composite charger includes an insertion end, the insertion end is configured to be inserted into the composite connection socket in an insertion direction, the insertion end includes a liquid supply plug, a liquid return plug, and a charging plug, the liquid supply plug and the liquid return plug are connected to a liquid cooling unit through a pipeline, and the liquid cooling unit includes a coolant. One end of the charging plug is configured to connect to a power module of the charging device, and the other end of the charging plug is configured to output a direct current. The insertion end further includes a first connection confirmation terminal and a second connection confirmation terminal, one end of the first connection confirmation terminal is configured to connect to a first connection confirmation socket of the composite connection socket, the other end of the first connection confirmation terminal is configured to connect to a first connection confirmation circuit, one end of the second connection confirmation terminal is configured to connect to a second connection confirmation socket of the composite connection socket, and the other end of the second connection confirmation terminal is configured to connect to a second connection confirmation circuit. When the first connection confirmation terminal is connected to the first connection confirmation socket, the first connection confirmation circuit and a connection confirmation circuit connected to the first connection confirmation socket form a first connection confirmation loop, and the first connection confirmation loop is configured to confirm a connection status between the liquid supply plug and the composite connection socket and a connection status between the liquid return plug and the composite connection socket. When the second connection confirmation terminal is connected to the second connection confirmation socket, the second connection confirmation circuit and a connection confirmation circuit connected to the second connection confirmation socket form a second connection confirmation loop, and the second connection confirmation loop is configured to confirm a connection status between the charging plug and the composite connection socket. A length of the second connection confirmation terminal exposed from the insertion end of the composite charger in the insertion direction is L1, a length of the first connection confirmation terminal exposed from the insertion end of the composite charger in the insertion direction is L3, and L1≤L3.

In the technical solution provided in this application, when the composite charger is inserted into the composite connection socket, the liquid cooling unit may communicate with a coolant pipeline of a battery management system, the charging device may be connected to a battery of the vehicle, and it can be ensured that the coolant flows between the liquid cooling unit and the coolant pipeline of the battery management system first and the battery of the vehicle is powered on with the charging device later. When the first connection confirmation terminal of the off-vehicle charger is connected to the first connection confirmation socket of the on-vehicle connection socket, the coolant may be transmitted between the liquid cooling unit and the coolant pipeline of the battery management system, and the liquid cooling unit may assist the battery management system in heat dissipation of a power battery of the vehicle. In this way, the off-vehicle liquid cooling unit is used to improve a heat dissipation capability of the on-vehicle battery management system for the power battery of the vehicle, to meet a heat dissipation requirement of battery supercharging. As the composite charger provided in this application is used, a heat dissipation requirement during supercharging of the battery of the vehicle can be met without upgrading and reconstructing the on-vehicle battery management system or by upgrading and reconstructing the on-vehicle battery management system to a small extent. This can reduce costs of upgrading and reconstructing the on-vehicle battery management system, and avoid, to a large extent, a waste of resources caused by upgrading and reconstructing the on-vehicle battery management system when the battery is not charged, and almost does not increase a weight of the entire vehicle and does not increase energy consumption of the vehicle.

In a specific implementation solution, the liquid supply plug includes a sleeve and a piston pipe, and the sleeve and the piston pipe are sleeved in the insertion direction. The piston pipe is of a hollow tubular structure, a first end of the piston pipe includes an opening, a second end of the piston pipe is closed, the first end of the piston pipe is configured to connect to the composite connection socket, a side wall of the piston pipe that is close to the second end of the piston pipe includes a through hole, and the through hole is configured to communicate the pipeline with the piston pipe. The piston pipe and the sleeve are movable relative to each other in the insertion direction; and when the composite charger is not connected to the composite connection socket, the sleeve closes the through hole, to disconnect the communication between the pipeline and the piston pipe; or when the composite charger is connected to the composite connection socket, the sleeve avoids the through hole, to communicate the pipeline with the piston pipe.

In a specific implementation solution, the composite charger further includes a first housing, the first housing includes a first end in the insertion direction, the first end of the first housing is configured to connect to the composite connection socket, and the liquid supply plug and the liquid return plug are separately disposed at the first end of the first housing. The first end of the first housing includes a first positioning through hole, and the first positioning through hole includes a locking portion. When the composite charger is inserted into the composite connection socket, the locking portion extends into the composite connection socket from the first positioning through hole in a vertical direction of the insertion direction, to lock relative positions of the composite charger and the composite connection socket.

In a specific implementation solution, the composite charger further includes an assisting handle structure, the assisting handle structure includes a holding portion, a first connection portion, and a second connection portion, the first connection portion and the second connection portion are respectively connected to two ends of the holding portion, and the first connection portion and the second connection portion are respectively connected to two sides of the composite charger that are opposite to each other in a vertical direction of the insertion direction.

In a specific implementation solution, the vehicle is provided with an insertion auxiliary structure, the insertion auxiliary structure includes a traction frame extending in the insertion direction and movable in the insertion direction, one end of the traction frame is movably connected to the vehicle, and the other end of the traction frame is provided with an abutting portion. An outer wall of the composite charger includes a protrusion, the protrusion is disposed close to the insertion end of the composite charger in the insertion direction, and a projection of the protrusion at least partially overlaps a projection of the abutting portion in the insertion direction. When the composite charger is connected to the composite connection socket and the composite charger is at a first position, the traction frame pulls the composite charger to move from the first position to a second position, so that the composite charger is completely connected to the composite connection socket.

In a specific implementation solution, the composite charger further includes a signal trigger terminal, the signal trigger terminal is disposed at the insertion end of the composite charger, and when the composite charger is at the first position, the signal trigger terminal is electrically connected to a signal trigger terminal of the composite connection socket. In response to the signal trigger terminal being electrically connected to the signal trigger terminal of the composite connection socket, the traction frame pulls the composite charger to move from the first position to the second position, so that the composite charger is successfully connected to the composite connection socket.

In a specific implementation solution, the first connection confirmation terminal, the second connection confirmation terminal, and the signal trigger terminal are separately located between the liquid supply plug and the liquid return plug in a vertical direction of the insertion direction. The first connection confirmation terminal, the second connection confirmation terminal, and the signal trigger terminal are spaced apart in a vertical direction of the insertion direction.

In a specific implementation solution, a length of the signal trigger terminal exposed from the insertion end of the composite charger in the insertion direction is L2, and L3<L2. When the composite charger is at the first position, the signal trigger terminal is electrically connected to the signal trigger terminal of the composite connection socket; and when the composite charger is at the second position, the first connection confirmation terminal is electrically connected to a connection confirmation terminal of the composite connection socket.

In a specific implementation solution, a cooling pool is provided in the composite charger, the cooling pool is in thermally conductive contact with the charging plug, the cooling pool includes a liquid inlet interface and a liquid outlet interface, and the liquid inlet interface and the liquid outlet interface communicate with the liquid cooling unit.

In a specific implementation solution, the insertion end of the composite charger further includes an auxiliary power plug, one end of the auxiliary power plug is configured to connect to an auxiliary power socket of the composite connection socket, and the other end of the auxiliary power plug is configured to connect to a low-voltage auxiliary power supply of the charging device.

In a specific implementation solution, the insertion end of the composite charger further includes a communication plug, one end of the communication plug is configured to connect to a communication socket of the composite connection socket, and the other end of the communication plug is configured to connect to a charging device controller.

According to a fifth aspect, this application provides a composite connection socket. The composite connection socket is configured to connect to a composite charger outside a vehicle in an insertion manner. The composite connection socket includes an insertion end, the insertion end is configured to be inserted into the composite charger in an insertion direction, the insertion end includes a liquid inlet socket, a liquid outlet socket, and a charging socket, the liquid inlet socket and the liquid outlet socket are connected to a coolant pipeline of a battery management system of the vehicle through a pipeline. One end of the charging socket is configured to connect to a battery of the vehicle, and the other end of the charging socket is configured to input a direct current. The insertion end further includes a first connection confirmation socket and a second connection confirmation socket, one end of the first connection confirmation socket is configured to connect to a first connection confirmation terminal of the composite charger, the other end of the first connection confirmation socket is configured to connect to a third connection confirmation circuit, one end of the second connection confirmation socket is configured to connect to a second connection confirmation terminal of the composite charger, and the other end of the second connection confirmation socket is configured to connect to a fourth connection confirmation circuit. When the first connection confirmation terminal is connected to the first connection confirmation socket, the third connection confirmation circuit and a connection confirmation circuit connected to the first connection confirmation terminal form a first connection confirmation loop, and the first connection confirmation loop is configured to confirm a connection status between the liquid inlet socket and the composite charger and a connection status between the liquid outlet socket and the composite charger. When the second connection confirmation terminal is connected to the second connection confirmation socket, the fourth connection confirmation circuit and a connection confirmation circuit connected to the second connection confirmation terminal form a second connection confirmation loop, and the second connection confirmation loop is configured to confirm a connection status between the charging socket and the composite charger. A length of the second connection confirmation socket exposed from the insertion end of the composite connection socket in the insertion direction is L1, a length of the first connection confirmation socket exposed from the insertion end of the composite connection socket in the insertion direction is L3, and L1≤L3.

In the technical solution provided in this application, when the composite charger is inserted into the composite connection socket, a liquid cooling unit may communicate with the coolant pipeline of the battery management system, a charging device may be connected to the battery of the vehicle, and it can be ensured that the coolant flows between the liquid cooling unit and the coolant pipeline of the battery management system first and the battery of the vehicle is powered on with the charging device later. When the first connection confirmation terminal of the off-vehicle charger is connected to the first connection confirmation socket of the on-vehicle connection socket, the coolant may be transmitted between the liquid cooling unit and the coolant pipeline of the battery management system, and the liquid cooling unit may assist the battery management system in heat dissipation of a power battery of the vehicle. In this way, the off-vehicle liquid cooling unit is used to improve a heat dissipation capability of the on-vehicle battery management system for the power battery of the vehicle, to meet a heat dissipation requirement of battery supercharging. As the composite connection socket provided in this application is used, a heat dissipation requirement during supercharging of the battery of the vehicle can be met without upgrading and reconstructing the on-vehicle battery management system or by upgrading and reconstructing the on-vehicle battery management system to a small extent. This can reduce costs of upgrading and reconstructing the on-vehicle battery management system, and avoid, to a large extent, a waste of resources caused by upgrading and reconstructing the on-vehicle battery management system when the battery is not charged, and almost does not increase a weight of the entire vehicle and does not increase energy consumption of the vehicle.

In a specific implementation solution, the liquid inlet socket includes a sleeve and a piston pipe, and the sleeve and the piston pipe are sleeved in the insertion direction. The piston pipe is of a hollow tubular structure, a first end of the piston pipe includes an opening, a second end of the piston pipe is closed, the first end of the piston pipe is configured to connect to the composite charger, a side wall of the piston pipe that is close to the second end of the piston pipe includes a through hole, and the through hole is configured to communicate the pipeline with the piston pipe. The piston pipe and the sleeve are movable relative to each other in the insertion direction; and when the composite connection socket is not connected to the composite charger, the sleeve closes the through hole, to disconnect the communication between the pipeline and the piston pipe; or when the composite connection socket is connected to the composite charger, the sleeve avoids the through hole, to communicate the pipeline with the piston pipe.

In a specific implementation solution, the composite connection socket further includes a second housing, the second housing includes a first end in the insertion direction, the first end of the second housing is configured to connect to the composite charger, the liquid inlet socket and the liquid outlet socket are separately disposed at the first end of the second housing. The first end of the second housing includes a second positioning through hole, and the second positioning through hole includes a locking portion. When the composite charger is inserted into the composite connection socket, the locking portion extends into the composite charger from the second positioning through hole in a vertical direction of the insertion direction, to lock relative positions of the composite charger and the composite connection socket.

In a specific implementation solution, the insertion end of the composite connection socket further includes an auxiliary power socket, one end of the auxiliary power socket is configured to connect to an auxiliary power plug of the composite charger, and the other end of the auxiliary power socket is configured to connect to the battery management system of the vehicle.

In a specific implementation solution, the insertion end of the composite connection socket further includes a communication socket, one end of the communication socket is configured to connect to a communication plug of the composite charger, and the other end of the communication socket is configured to connect to the battery management system of the vehicle.

According to a sixth aspect, this application provides a charging device, including a power module, a liquid cooling unit, and the composite charger according to any one of the possible implementation solutions of the fourth aspect. The composite charger is configured to be inserted into a composite connection socket of a vehicle. The charging plug is connected to the power module, and the liquid supply plug and the liquid return plug are connected to the liquid cooling unit through the pipeline. After the charging plug, the liquid supply plug, and the liquid return plug are successfully connected to the composite connection socket, the power module is configured to output a direct current to a battery of the vehicle through the charging plug, to charge the battery; the liquid cooling unit is configured to output a coolant to a battery management system of the vehicle through the liquid supply plug, to dissipate heat for the battery; and the liquid cooling unit is configured to receive, through the liquid return plug, the coolant output by the battery management system.

In a specific implementation solution, the liquid cooling unit includes a heat exchanger, a coolant tank, and a water pump, and the liquid supply plug and the liquid return plug communicate with at least one of the heat exchanger and the coolant tank through the pipeline. The coolant tank is configured to accommodate the coolant. The heat exchanger is configured to receive the coolant transmitted by the liquid return plug through the pipeline. The water pump is configured to drive the coolant to flow between the liquid supply plug, the liquid return plug, the heat exchanger, and the coolant tank.

### BRIEF DESCRIPTION OF DRAWINGS

FIG. 1 is an application diagram of a connection apparatus according to this application;
FIG. 2 is a diagram of a structure of a connection apparatus according to this application;
FIG. 3 is a diagram of a structure of an off-vehicle charger according to this application;
FIG. 4 is a diagram of a structure of an on-vehicle connection socket according to this application;
FIG. 5 is a diagram of a partial structure of a liquid supply plug of an off-vehicle charger according to this application;
FIG. 6 is a diagram of a structure of an off-vehicle charger according to this application;
FIG. 7 is a diagram of a terminal of an off-vehicle charger and a socket that is of an on-vehicle connection socket and that corresponds to the terminal according to this application;
FIG. 8 is a diagram of another structure of an off-vehicle charger according to this application; and
FIG. 9 is a diagram of another structure of an on-vehicle connection socket according to this application.

Reference numerals:
1: vehicle; 2: liquid cooling unit; 3: connection apparatus; 4: charging pile;
100: off-vehicle charger; 200: on-vehicle connection socket; 300: locking portion; 400: assisting handle structure;
500: insertion auxiliary structure;
101: first housing; 102: first connection confirmation terminal; 103: liquid supply plug; 104: liquid return plug;
105: first positioning through hole; 106: signal trigger terminal; 107: charging plug; 108: second connection confirmation terminal;
109: protrusion;
201: second housing; 202: first connection confirmation socket; 203: liquid inlet socket; 204: liquid outlet socket;
205: second positioning through hole; 206: signal trigger socket; 207: charging socket; 208: second connection confirmation socket;
401: first connection portion; 402: second connection portion; 403: holding portion; 501: traction frame;
502: abutting portion; 1031: sleeve; 1032: piston pipe; 1033: through hole.

### DESCRIPTION OF EMBODIMENTS

To make the objectives, technical solutions, and advantages of this application clearer, the following further describes embodiments of this application in detail with reference to the accompanying drawings. However, example implementations can be implemented in a plurality of forms, and should not be construed as being limited to the implementations described herein. Identical reference numerals in the accompanying drawings denote identical or similar structures. Therefore, repeated description thereof is omitted. Expressions of positions and directions in embodiments of this application are described by using the accompanying drawings as an example. However, changes may also be made as required, and all the changes fall within the protection scope of this application. The accompanying drawings in embodiments of this application are merely used to illustrate a relative position relationship and do not represent an actual scale.

Details are described in the following descriptions to facilitate understanding of this application. However, embodiments of this application may be implemented in a plurality of manners different from those described herein, and a person skilled in the art may make similar promotion without departing from the connotation of embodiments of this application. Therefore, this application is not limited to the specific implementations disclosed below.

For ease of understanding, application scenarios of an off-vehicle charger and an on-vehicle connection socket in this application are first described. The off-vehicle charger provided in this embodiment of this application and the on-vehicle connection socket provided in this embodiment of this application may be adapted to form a connection apparatus. The connection apparatus may be used in a vehicle, for example, an electric vehicle such as an electric car or an electric heavy truck, or a hybrid vehicle. The connection apparatus may connect an off-vehicle (outside the vehicle) liquid cooling unit to a coolant pipeline of an on-vehicle (on the vehicle) battery management system (battery management system, BMS) during charging of the vehicle, so that the liquid cooling unit performs coolant transmission with the battery management system, to improve a heat exchange capability of the battery management system for a battery of the vehicle. The connection apparatus may alternatively be electrically connected to a charging device, for example, a charging pile, and a battery (or a battery pack) of the vehicle, so that the charging device transmits electric energy to the battery of the vehicle, to charge the battery of the vehicle. When the connection apparatus can perform transmission on both a coolant and electric energy, the off-vehicle charger may also be referred to as a composite charger, and correspondingly, the on-vehicle connection socket may also be referred to as a composite connection socket. It may be understood that the off-vehicle charger and the on-vehicle connection socket that are provided in this embodiment of this application are not limited to being mutually adapted. In other words, the off-vehicle charger provided in this embodiment of this application may alternatively be adapted to another on-vehicle connection structure to form a connection apparatus with the foregoing functions. Similarly, the on-vehicle connection socket provided in this embodiment of this application may alternatively be adapted to another off-vehicle connection structure to form a connection apparatus with the foregoing functions.

In a conventional technology, high-rate supercharging of the battery imposes a higher heat dissipation requirement on the battery management system, and the battery management system needs to quickly dissipate heat generated by the battery during supercharging. In a solution in which a heat dissipation capability of the battery management system of the vehicle for the battery is improved to adapt to supercharging, costs are high, the improvement can be effectively used only during charging of the battery, and is redundant in another working condition, resulting in an increase in a weight of the entire vehicle and higher energy consumption.

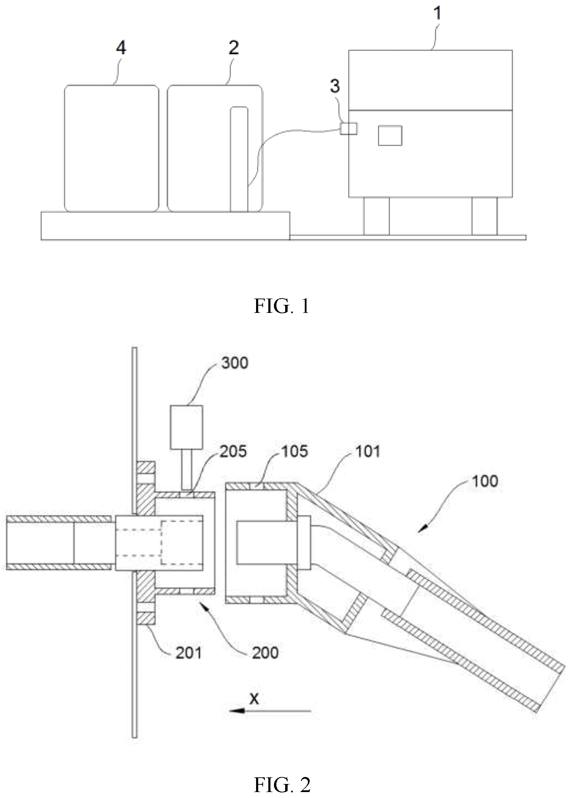

Based on this, an embodiment of this application provides a connection apparatus. As shown in FIG. 1, the connection apparatus 3 may connect a liquid cooling unit 2 outside a vehicle 1 to a coolant pipeline of an on-vehicle battery management system 1, so that the off-vehicle liquid cooling unit 2 is used to improve a heat dissipation capability of the on-vehicle battery management system for a power battery of the vehicle 1, to meet a heat dissipation requirement of battery supercharging, reduce costs of upgrading and reconstructing the battery management system of the vehicle 1, and avoid a waste of resources when the battery is not charged. In addition, impact on a weight of the entire vehicle 1 and energy consumption of the vehicle 1 is small.

Refer to FIG. 2. FIG. 2 is a diagram of a structure of a connection apparatus according to this application. For coordinate directions in the following figures, a direction indicated by an x-axis indicates a first direction, a direction indicated by a y-axis indicates a second direction, and a direction indicated by a z-axis indicates a third direction. The second direction may be perpendicular to the first direction, and the third direction may be perpendicular to the first direction and the second direction. As shown in FIG. 2, the connection apparatus provided in this embodiment of this application may include an off-vehicle charger 100 and an on-vehicle connection socket 200 that can be connected to each other in an insertion manner in the first direction. The first direction is an insertion direction of the off-vehicle charger 100 and the on-vehicle connection socket 200, which is briefly referred to as an insertion direction, so that the second direction and the third direction are vertical directions of the insertion direction. In practice, the insertion direction may be a horizontal direction, or the insertion direction may be a direction that is inclined upward at a specific angle relative to a horizontal direction. The on-vehicle connection socket 200 may be fastened to a vehicle. The off-vehicle charger 100 may include a first housing 101, and the on-vehicle connection socket 200 may include a second housing 201. When the off-vehicle charger 100 is inserted into the on-vehicle connection socket 200, a first end of the off-vehicle charger 100 in the insertion direction may be inserted into a first end of the on-vehicle connection socket 200 in the insertion direction. In this case, the first end of the off-vehicle charger 100 in the insertion direction may also be referred to as an insertion end of the off-vehicle charger 100. Correspondingly, the first end of the on-vehicle connection socket 200 in the insertion direction may also be referred to as an insertion end of the on-vehicle connection socket 200. Specifically, a first end of the first housing 101 in the insertion direction may be connected to a first end of the second housing 201 in the insertion direction, that is, a first end of the first housing 101 in the first direction may be connected to a first end of the second housing 201 in the first direction. A second end of the first housing 101 in the first direction may be connected to an air conditioner liquid cooling unit outside the vehicle. A second end of the second housing 201 in the first direction may be connected to a coolant pipeline of a battery management system of the vehicle.

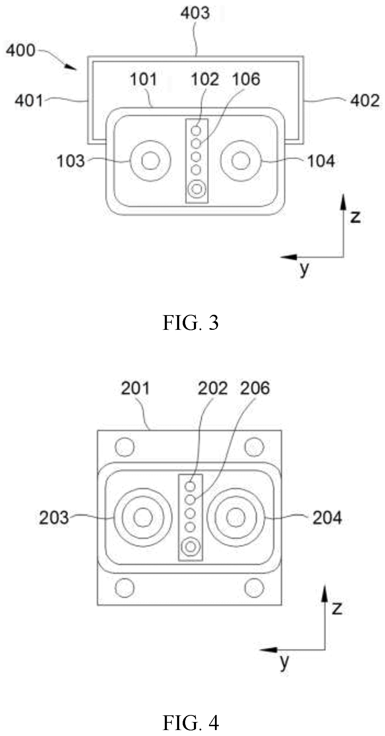

FIG. 3 is a diagram of a structure of the off-vehicle charger according to this application. As shown in FIG. 3, in practice, the off-vehicle charger 100 may further include a first connection confirmation terminal 102, a liquid supply plug 103, and a liquid return plug 104. The first connection confirmation terminal 102, the liquid supply plug 103, and the liquid return plug 104 may be separately disposed at the first end of the first housing 101 in the first direction. A length of the liquid supply plug 103 exposed from the first end of the first housing 101 in the first direction is the same as a length of the liquid return plug 104 exposed from the first end of the first housing 101 in the first direction. The liquid supply plug 103 and the liquid return plug 104 are spaced apart in the second direction, and the liquid supply plug 103 and the liquid return plug 104 may be separately connected to a liquid cooling unit (or referred to as the air conditioner liquid cooling unit) outside the vehicle through a pipeline. A coolant flows in the liquid cooling unit. The first connection confirmation terminal 102 may be located between the liquid supply plug 103 and the liquid return plug 104 in the second direction. The first connection confirmation terminal 102 is connected to a first connection confirmation circuit. The first connection confirmation circuit may be disposed on the off-vehicle charger 100, or may be disposed on the liquid cooling unit. For example, the first connection confirmation circuit may be integrated into a liquid cooling unit controller.

FIG. 4 is a diagram of a structure of the on-vehicle connection socket according to this application. As shown in FIG. 4, the on-vehicle connection socket 200 may further include a first connection confirmation socket 202, a liquid inlet socket 203, and a liquid outlet socket 204. The first connection confirmation socket 202, the liquid inlet socket 203, and the liquid outlet socket 204 may be separately disposed at the first end of the second housing 201 in the first direction. A length of the liquid inlet socket 203 exposed from the first end of the second housing 201 in the first direction is the same as a length of the liquid outlet socket 204 exposed from the first end of the second housing 201 in the first direction. The liquid inlet socket 203 and the liquid outlet socket 204 are spaced apart in the second direction, and the liquid inlet socket 203 and the liquid outlet socket 204 may be separately connected to the coolant pipeline of the battery management system of the vehicle through the pipeline. The coolant flows in the coolant pipeline of the battery management system. The first connection confirmation socket 202 may be located between the liquid inlet socket 203 and the liquid outlet socket 204 in the second direction. The first connection confirmation socket 202 is connected to a third connection confirmation circuit of the vehicle. The third connection confirmation circuit may be disposed on the on-vehicle connection socket 200, or may be disposed on the vehicle. For example, the third connection confirmation circuit may be integrated into a vehicle controller. When the off-vehicle charger 100 is inserted into the on-vehicle connection socket 200, the first connection confirmation terminal 102 of the off-vehicle charger 100 may be electrically connected to the first connection confirmation socket 202 of the on-vehicle connection socket 200, so that the first connection confirmation circuit is connected to the third connection confirmation circuit. The first connection confirmation circuit and the third connection confirmation circuit form a first connection confirmation loop, to confirm a connection status between the liquid supply plug 103 of the off-vehicle charger 100 and the liquid inlet socket 203 of the on-vehicle connection socket 200 and a connection status between the liquid return plug 104 of the off-vehicle charger 100 and the liquid outlet socket 204 of the on-vehicle connection socket 200.

In practice, when the off-vehicle charger 100 is inserted into the on-vehicle connection socket 200, the first end of the first housing 101 in the first direction is connected to the first end of the second housing 201 in the first direction, the liquid supply plug 103 is connected to the liquid inlet socket 203, and the liquid return plug 104 is connected to the liquid outlet socket 204. In this case, a structural condition that the liquid cooling unit and the coolant pipeline of the battery management system are interconnected for coolant transmission is met. When the first connection confirmation terminal 102 of the off-vehicle charger 100 is electrically connected to the first connection confirmation socket 202 of the on-vehicle connection socket 200, the first connection confirmation circuit is connected to the third connection confirmation circuit, to form the first connection confirmation loop. The vehicle controller confirms that the liquid supply plug 103 and the liquid return plug 104 of the off-vehicle charger 100 are respectively successfully connected to the liquid inlet socket 203 and the liquid outlet socket 204 of the on-vehicle connection socket 200. In this case, the vehicle controller may make a response. Specifically, the vehicle controller may control the coolant pipeline of the battery management system to be open, the vehicle controller may communicate with the liquid cooling unit controller, and the liquid cooling unit controller may control the liquid cooling unit to be open, so that the coolant may be transmitted between the coolant pipeline of the battery management system and the liquid cooling unit through the liquid supply plug 103 and the liquid inlet socket 203 that are connected to each other and the liquid return plug 104 and the liquid outlet socket 204 that are connected to each other, and the liquid cooling unit may assist the battery management system in heat dissipation of a power battery of the vehicle. In this way, the off-vehicle liquid cooling unit is used to improve a heat dissipation capability of the on-vehicle battery management system for the power battery of the vehicle, to meet a heat dissipation requirement of battery supercharging. As the off-vehicle charger 100 or the on-vehicle connection socket 200 provided in this embodiment of this application is used, a heat dissipation requirement during supercharging of the battery of the vehicle can be met without upgrading and reconstructing the on-vehicle battery management system or by upgrading and reconstructing the on-vehicle battery management system to a small extent. This can reduce costs of upgrading and reconstructing the on-vehicle battery management system, and avoid, to a large extent, a waste of resources caused by upgrading and reconstructing the on-vehicle battery management system when the battery is not charged, and almost does not increase a weight of the entire vehicle and does not increase energy consumption of the vehicle.

In practice, the liquid supply plug 103 may be connected to the liquid cooling unit outside the vehicle through the pipeline, and the liquid supply plug 103 is connected to the pipeline in a sealed manner. The sealed manner may be using a sealing ring structure at a joint, or implementing sealing at a joint through glue filling. Similarly, the liquid return plug 104 may be connected to the liquid cooling unit outside the vehicle through the pipeline, and the liquid return plug 104 is connected to the pipeline in a sealed manner. The liquid inlet socket 203 may be connected to the coolant pipeline of the battery management system of the vehicle through the pipeline, and the liquid inlet socket 203 is connected to the pipeline in a sealed manner. The liquid outlet socket 204 may be connected to the coolant pipeline of the battery management system of the vehicle through the pipeline, and the liquid outlet socket 204 is connected to the pipeline in a sealed manner.

The vehicle controller may determine, by detecting a voltage change of the first connection confirmation loop, whether the first connection confirmation terminal 102 and the first connection confirmation socket 202 are connected to each other and turned on, that is, determine whether the first connection confirmation circuit is connected to the third connection confirmation circuit. Specifically, when the first connection confirmation terminal 102 is electrically connected to the first connection confirmation socket 202, the vehicle controller detects that a voltage of the first connection confirmation loop changes, and therefore the vehicle controller determines that the off-vehicle charger 100 is successfully connected to the on-vehicle connection socket 200. The vehicle controller controls the coolant pipeline of the battery management system to be open, the vehicle controller communicates with the liquid cooling unit controller, and the liquid cooling unit controller controls the liquid cooling unit to be open, so that the coolant may be transmitted between the liquid cooling unit and the battery management system, and the liquid cooling unit may be used to improve a heat exchange capability of the battery management system, to improve a heat exchange capability of the battery management system for the battery of the vehicle by using the liquid cooling unit. It may be understood that the battery management system may dissipate heat for the battery of the vehicle, or may heat the battery of the vehicle. The liquid cooling unit may improve a heat dissipation capability of the battery management system for the battery of the vehicle, or may improve a heating capability of the battery management system for the battery of the vehicle.

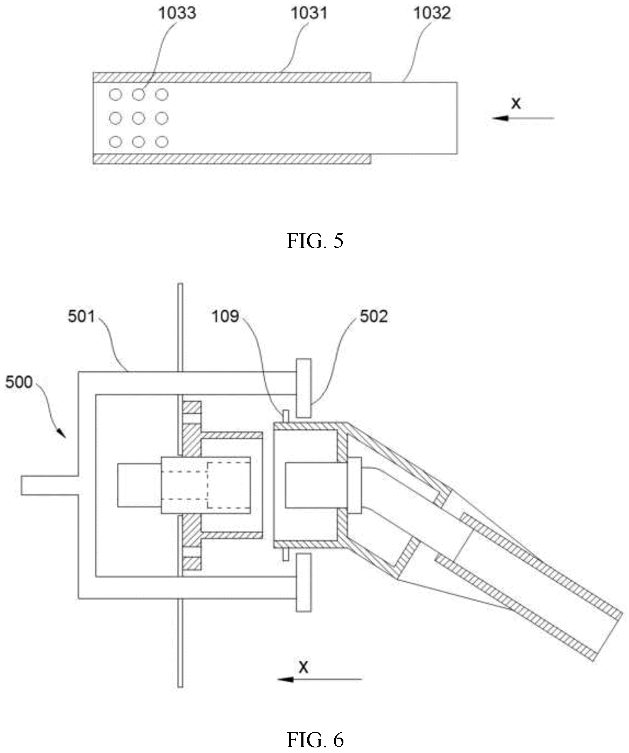

FIG. 5 is a diagram of a partial structure of the liquid supply plug of the off-vehicle charger according to this application. As shown in FIG. 5, in a possible design, the liquid supply plug 103 may include a sleeve 1031 and a piston pipe 1032. The sleeve 1031 and the piston pipe 1032 may be connected in a sleeving manner in the first direction. The piston pipe 1032 may be of a hollow tubular structure, the piston pipe 1032 has a first end and a second end, the first end of the piston pipe 1032 has an opening, and the second end of the piston pipe 1032 is closed. The first end of the piston pipe 1032 may be connected to the on-vehicle connection socket 200, and the second end of the piston pipe 1032 may be connected to the liquid cooling unit through the pipeline. A through hole 1033 is provided on a side wall of the piston pipe 1032 that is close to the second end of the piston pipe, and the through hole 1033 may communicate the pipeline with the piston pipe 1032. The piston pipe 1032 and the sleeve 1031 are movable relative to each other in the first direction. In this way, the sleeve 1031 avoids or closes the through hole 1033 of the piston pipe 1032, so that the piston pipe 1032 communicates with the pipeline through the through hole 1033 to communicate with the liquid cooling unit, or the piston pipe 1032 is disconnected from the pipeline to disconnect from the liquid cooling unit. Specifically, when the off-vehicle charger 100 is not connected to the on-vehicle connection socket 200, the sleeve 1031 closes the through hole 1033, to disconnect the communication between the pipeline and the piston pipe 1032. When the off-vehicle charger 100 is connected to the on-vehicle connection socket 200, the sleeve 1031 avoids the through hole 1033, to communicate the pipeline with the piston pipe 1032.

In practice, the piston pipe 1032 may be movably sleeved in the sleeve 1031, and the piston pipe 1032 may move relative to the sleeve 1031. A spring may be disposed in the sleeve 1031, and two ends of the spring are respectively connected to the piston pipe 1032 and the sleeve 1031. When the off-vehicle charger 100 is inserted into the on-vehicle connection socket 200, the piston pipe 1032 moves relative to the sleeve 1031.

The liquid return plug 104 may have a same structure as that of the liquid supply plug 103, and the liquid inlet socket 203 and the liquid outlet socket 204 may also have a same structure as that of the liquid supply plug 103. For example, the liquid inlet socket 203 has a same structure as that of the liquid supply plug 103, the liquid supply plug 103 and the liquid inlet socket 203 form a pair of male and female connectors, and a sleeve of the liquid inlet socket 203 avoids or closes a through hole of a piston pipe, so that the piston pipe may communicate with the coolant pipeline of the battery management system of the vehicle through the through hole, or the piston pipe may be disconnected from the coolant pipeline of the battery management system of the vehicle. Similarly, the liquid return plug 104 and the liquid outlet socket 204 may also form a pair of male and female connectors.

For example, the liquid supply plug 103 and the liquid inlet socket 203 form the pair of male and female connectors. When the connectors do not engage in connection, the sleeve 1031 of each connector closes the through hole 1033 in the piston pipe 1032 under an elastic force of a spring. When the off-vehicle charger 100 is inserted into the on-vehicle connection socket 200, the liquid supply plug 103 is connected to the liquid inlet socket 203, the piston pipe 1032 of the liquid supply plug 103 and the piston pipe 1032 of the liquid inlet socket 203 are mutually topped, piston pipes 1032 of the liquid supply plug 103 and the liquid inlet socket 203 move separately, and the through hole 1033 in the piston pipe 1032 is avoided by the sleeve 1031, so that the two connectors communicate with each other, and the coolant flows between the liquid cooling unit and the coolant pipeline of the battery management system of the vehicle. When the off-vehicle charger 100 is separated from the on-vehicle connection socket 200, the liquid supply plug 103 is separated from the liquid inlet socket 203, piston pipes 1032 of the liquid supply plug 103 and the liquid inlet socket 203 separately move reversely under an elastic force of a spring, and a through hole 1033 in a piston pipe 1032 of each connector is closed by a sleeve 1031, so that the two connectors are shut off separately, and no leakage occurs. Similarly, the liquid return plug 104 and the liquid outlet socket 204 form the pair of male and female connectors, the two connectors communicate with each other when being connected to each other, and the two connectors are shut off after being separated.

In a possible implementation, as shown in FIG. 2, a first positioning through hole 105 may be provided on the first housing 101, the first positioning through hole 105 may be provided close to the first end of the first housing 101 in the first direction, and a locking portion 300 may be fastened or pluggably connected in the first positioning through hole 105. A second positioning through hole 205 may be provided on the second housing 201, the second positioning through hole 205 may be provided close to the first end of the second housing 201 in the first direction. A position of the second positioning through hole 205 corresponds to a position of the first positioning through hole 105 in the second direction or the third direction.

When the off-vehicle charger 100 is inserted into the on-vehicle connection socket 200, the locking portion 300 may extend into the second positioning through hole 205 from the first positioning through hole 105 in the vertical direction of the first direction, for example, the locking portion 300 may extend into the second positioning through hole 205 from the first positioning through hole 105 in the third direction, to lock relative positions of the first housing 101 and the second housing 201, lock relative positions of the off-vehicle charger 100 and the on-vehicle connection socket 200, and prevent the off-vehicle charger 100 from being drawn in a noncontrolled situation. In practice, the first positioning through hole 105 may be provided on the top or a side of the first housing 101, and correspondingly, the second positioning through hole 205 may be provided on the top or a side of the second housing 201. In this way, when the off-vehicle charger 100 is inserted into the on-vehicle connection socket 200, the locking portion 300 may be located on the top or a side of the whole of the off-vehicle charger 100 and the on-vehicle connection socket 200, to facilitate operating the locking portion 300. Specifically, the locking portion 300 may be an electronic lock, and the electronic lock may be controlled by the vehicle controller or the liquid cooling unit controller.

In practice, the locking portion 300 may alternatively be fastened or pluggably connected in the second positioning through hole 205. When the off-vehicle charger 100 is inserted into the on-vehicle connection socket 200, the locking portion 300 may extend into the first positioning through hole 105 from the second positioning through hole 205 in the vertical direction of the first direction, to lock relative positions of the first housing 101 and the second housing 201.

In a possible implementation, as shown in FIG. 3, an assisting handle structure 400 may be provided on the first housing 101. The assisting handle structure 400 may include a holding portion 403, a first connection portion 401, and a second connection portion 402. The first connection portion 401 and the second connection portion 402 are spaced apart, and the first connection portion 401 and the second connection portion 402 are respectively connected to two ends of the holding portion 403. In practice, the first connection portion 401 and the second connection portion 402 may be respectively connected to two sides of the first housing 101 that are opposite to each other in the second direction. In practice, an assisting handle may be of a structure similar to a U-shaped structure, and the first connection portion 401 and the second connection portion 402 are used as two opposite sides of the U-shaped structure. Specifically, both the first connection portion 401 and the second connection portion 402 may be of a strip structure. One end of the first connection portion 401 is free, one end of the second connection portion 402 is free, and the other end of the first connection portion 401 is connected to the other end of the second connection portion 402 through the holding portion 403, to form the U-shaped structure. The holding portion 403 may be of a strip structure, provided with a groove, to fit into a human hand and facilitate holding stability. The first connection portion 401 and the second connection portion 402 may be respectively connected to left and right sides of the first housing 101, or may be respectively connected to upper and lower sides of the first housing 101, in a hinged connection. In practice, the assisting handle structure 400 may rotate in a specific angle range relative to the off-vehicle charger 100, to help adjust an assisting angle, so that the off-vehicle charger 100 is more conveniently inserted into the on-vehicle connection socket 200.

In practice, the assisting handle structure 400 may include only a holding portion 403, and the holding portion 403 may be disposed close to the second end or the first end of the first housing 101 in the first direction. A shape of the holding portion 403 may be a U shape, an arc shape, or the like. In this case, two ends of the holding portion 403 may be separately fastened to the first housing 101. Alternatively, a shape of the holding portion 403 may be a straight line shape, an arc shape, or the like. In this case, one end of the holding portion 403 may be fastened to the first housing 101, and the other end is free. In practice, an operator may hold the holding portion 403 to exert an action force on the off-vehicle charger 100, so that the off-vehicle charger 100 is inserted into the on-vehicle connection socket 200.

FIG. 6 is a diagram of a structure of the off-vehicle charger according to this application. As shown in FIG. 6, the connection apparatus provided in this embodiment of this application may further include an insertion auxiliary structure 500. In practice, the insertion auxiliary structure 500 may be disposed on the vehicle. The insertion auxiliary structure 500 may include a traction frame 501 extending in the first direction and movable in the first direction. One end of the traction frame 501 may be movably connected to the vehicle, and the other end of the traction frame 501 may be provided with an abutting portion 502. The traction frame 501 and the on-vehicle connection socket 200 may be disposed at a same position on the vehicle, and the traction frame 501 may cover the on-vehicle connection socket 200 in the first direction.

In practice, a protrusion 109 may be disposed on an outer wall of the off-vehicle charger 100. Specifically, the protrusion 109 may be disposed on an outer wall of the first housing 101, and the protrusion 109 may be disposed close to the first end of the first housing 101 in the first direction. A projection of the protrusion 109 at least partially overlaps a projection of the abutting portion 502 in the first direction. When the traction frame 501 moves toward the on-vehicle connection socket 200 in the first direction, the protrusion 109 abuts against the abutting portion 502. The traction frame 501 may help overcome resistance (for example, the elastic force of the spring in the related description of the liquid supply plug 103) when the off-vehicle charger 100 is inserted into the on-vehicle connection socket 200, and pull the off-vehicle charger 100 to move from a first position to a second position, that is, pull the off-vehicle charger 100 to the on-vehicle connection socket 200 to make the off-vehicle charger 100 be inserted into the on-vehicle connection socket 200, to assist in completing insertion between the off-vehicle charger 100 and the on-vehicle connection socket 200.

In practice, the traction frame 501 may be connected to a power source of the vehicle. For example, the traction frame 501 may be connected to an air source of the vehicle. Specifically, the traction frame 501 may be connected to a cylinder of the vehicle, and the cylinder drives the traction frame 501 to move, so that the traction frame 501 moves in the first direction.

In practice, when the off-vehicle charger 100 is connected to the on-vehicle connection socket 200 and the off-vehicle charger 100 is at the first position, the traction frame 501 pulls the off-vehicle charger 100 to move from the first position to the second position, so that the off-vehicle charger 100 is completely connected to the on-vehicle connection socket 200, that is, the off-vehicle charger 100 is successfully connected to the on-vehicle connection socket 200. With reference to FIG. 3 and FIG. 4, the off-vehicle charger 100 may further include a signal trigger terminal 106, and the signal trigger terminal 106 may be disposed at the first end of the first housing 101 in the first direction. The on-vehicle connection socket 200 may further include a signal trigger socket 206, and the signal trigger socket 206 may be disposed at the first end of the second housing 201 in the first direction. When the off-vehicle charger 100 is at the first position, the signal trigger socket 206 may be electrically connected to the signal trigger terminal 106, to connect to a control circuit of the vehicle, and confirm a connection position of the off-vehicle charger 100. The control circuit of the vehicle may be integrated into the vehicle controller. For example, the traction frame 501 is connected to the cylinder of the vehicle. When the signal trigger socket 206 is electrically connected to the signal trigger terminal 106, the vehicle controller makes a response. Specifically, the vehicle controller controls the cylinder to work, to control the traction frame 501 to move, so that the traction frame 501 pulls the off-vehicle charger 100 to move from the first position to the second position, to complete insertion between the off-vehicle charger 100 and the on-vehicle connection socket 200.

In practice, the signal trigger terminal 106 may be located between the liquid supply plug 103 and the liquid return plug 104 in the second direction, the signal trigger terminal 106 and the first connection confirmation terminal 102 are spaced apart in the third direction, and the first connection confirmation terminal 102 and the signal trigger terminal 106 may be arranged in a row in the third direction. The signal trigger socket 206 may be located between the liquid inlet socket 203 and the liquid outlet socket 204 in the second direction, and the signal trigger socket 206 and the first connection confirmation socket 202 are spaced apart in the third direction. The first connection confirmation socket 202 and the signal trigger socket 206 may be arranged in a row in the third direction.

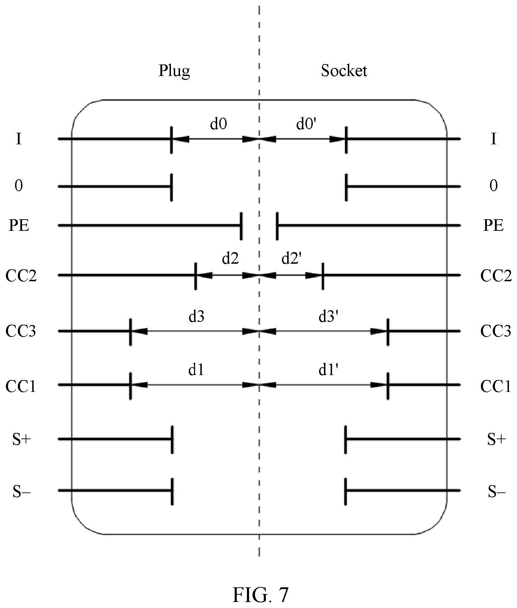

In the first direction, a length of the first connection confirmation terminal 102 exposed from the first housing 101 and a length of the first connection confirmation socket 202 exposed from the second housing 201 are both L3, a length of the signal trigger terminal 106 exposed from the first housing 101 and a length of the signal trigger socket 206 exposed from the second housing 201 are both L2, and L3<L2. In a process of inserting the off-vehicle charger 100 into the on-vehicle connection socket 200, the signal trigger terminal 106 is connected to the signal trigger socket 206 first, and the first connection confirmation terminal 102 is connected to the first connection confirmation socket 202 later. Specifically, when the off-vehicle charger 100 is at the first position, the signal trigger terminal 106 is electrically connected to the signal trigger socket 206. In this case, the first connection confirmation terminal 102 is not connected to the first connection confirmation socket 202. When the off-vehicle charger 100 is at the second position, the first connection confirmation terminal 102 is electrically connected to the first connection confirmation socket 202. FIG. 7 is a diagram of a terminal of the off-vehicle charger 100 and a socket that is of the on-vehicle connection socket 200 and that corresponds to the terminal. In FIG. 7, a plug indicates a charger side (or referred to as a plug side), and corresponds to the off-vehicle charger 100; and a socket indicates a vehicle side (or referred to as a socket side), and corresponds to the on-vehicle connection socket 200. CC3 indicates the length of the first connection confirmation terminal 102 exposed from the first housing 101 or the length of the first connection confirmation socket 202 exposed from the second housing 201, and CC2 indicates the length of the signal trigger terminal 106 exposed from the first housing 101 or the length of the signal trigger socket 206 exposed from the second housing 201. As shown in FIG. 7, d3>d2 (or d3'>d2'), that is, L3<L2 is shown.

In practice, when the off-vehicle charger 100 is at the first position, the off-vehicle charger 100 and the on-vehicle connection socket 200 may be correspondingly in a semi-connected state. In this case, the signal trigger terminal 106 is electrically connected to the signal trigger socket 206, and the vehicle controller controls the traction frame 501 to move to pull the off-vehicle charger 100 to move from the first position to the second position, so that the off-vehicle charger 100 is inserted into the on-vehicle connection socket 200, that is, the off-vehicle charger 100 is completely connected to the on-vehicle connection socket 200. When the off-vehicle charger 100 is at the second position, that is, when the off-vehicle charger 100 is completely connected to the on-vehicle connection socket 200, the liquid supply plug 103 is connected to the liquid inlet socket 203, the liquid return plug 104 is connected to the liquid outlet socket 204, and a structural condition that the liquid cooling unit and the coolant pipeline of the battery management system are interconnected for coolant transmission is met. In this case, the first connection confirmation terminal 102 is electrically connected to the first connection confirmation socket 202, the vehicle controller controls the coolant pipeline of the battery management system to be open, the vehicle controller communicates with the liquid cooling unit controller, the liquid cooling unit controller controls the liquid cooling unit to be open, and the coolant may be transmitted between the coolant pipeline of the battery management system and the liquid cooling unit.

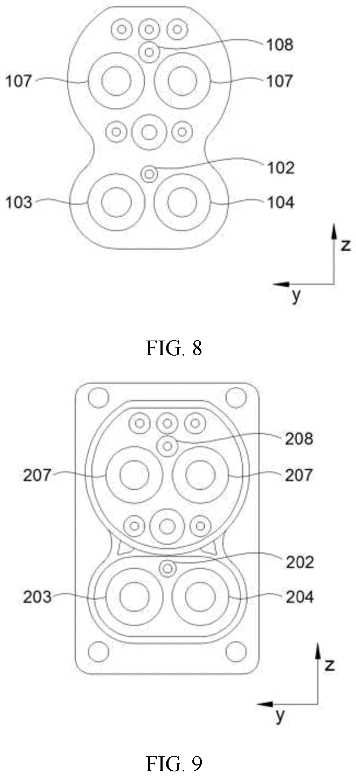

FIG. 8 is a diagram of another structure of the off-vehicle charger according to this application. FIG. 9 is a diagram of another structure of the on-vehicle connection socket according to this application. As shown in FIG. 8, the off-vehicle charger 100 may further include a plurality of charging plugs 107. In this case, the off-vehicle charger 100 can perform transmission on both the coolant and electric energy. That is, the off-vehicle charger 100 may be referred to as a composite charger. The plurality of charging plugs 107 may be disposed at the first end of the first housing 101 in the first direction. One end of the charging plug 107 may be connected to a power module of a charging device, and the other end of the charging plug 107 outputs a direct current. As shown in FIG. 9, corresponding to the off-vehicle charger 100, the on-vehicle connection socket 200 may further include a plurality of charging sockets 207. Similarly, in this case, the on-vehicle connection socket 200 can perform transmission on both the coolant and electric energy. That is, the on-vehicle connection socket 200 may be referred to as a composite connection socket. The plurality of charging sockets 207 may be disposed at the first end of the second housing 201 in the first direction, and the plurality of charging sockets 207 may be electrically connected to the battery of the vehicle. A length of the charging plug 107 exposed from the first end of the first housing 101 in the first direction is the same as a length of the charging socket 207 exposed from the first end of the second housing 201 in the first direction. When the off-vehicle charger 100 is inserted into the on-vehicle connection socket 200, the plurality of charging plugs 107 are electrically connected to the plurality of charging sockets 207 in a one-to-one correspondence, so that the charging device can charge the battery of the vehicle.

In practice, for example, the off-vehicle charger 100 includes three charging plugs 107, and the three charging plugs 107 are respectively used as a positive electrode (DC+), a negative electrode (DC-), and an earth electrode (PE) of the off-vehicle charger 100. The on-vehicle connection socket 200 includes three charging sockets 207. Similarly, the three charging sockets 207 are respectively used as a positive electrode (DC+), a negative electrode (DC-), and an earth electrode (PE) of the on-vehicle connection socket 200. When the off-vehicle charger 100 is inserted into the on-vehicle connection socket 200, the three charging plugs 107 are electrically connected to the three charging sockets 207 in a one-to-one correspondence. Specifically, a charging plug 107 used as the positive electrode is correspondingly electrically connected to a charging socket 207 used as the positive electrode, a charging plug 107 used as the negative electrode is correspondingly electrically connected to a charging socket 207 used as the negative electrode, and a charging plug 107 used as the earth electrode is correspondingly electrically connected to a charging socket 207 used as the earth electrode.

In practice, the off-vehicle charger 100 may further include a second connection confirmation terminal 108, and the second connection confirmation terminal 108 may be disposed at the first end of the first housing 101 in the first direction. The second connection confirmation terminal 108 may be located between the liquid supply plug 103 and the liquid return plug 104 in the second direction, and the second connection confirmation terminal 108 and the first connection confirmation terminal 102 are spaced apart in the third direction. The first connection confirmation terminal 102, the signal trigger terminal 106, and the second connection confirmation terminal 108 may be arranged in a row in the third direction. The second connection confirmation terminal 108 is connected to a second connection confirmation circuit. The second connection confirmation circuit may be disposed on the off-vehicle charger 100, or may be disposed on the charging device. For example, the second connection confirmation circuit may be integrated into a charging device controller. Corresponding to the off-vehicle charger 100, the on-vehicle connection socket 200 may further include a second connection confirmation socket 208, and the second connection confirmation socket 208 may be disposed at the first end of the second housing 201 in the first direction. The second connection confirmation socket 208 may be located between the liquid inlet socket 203 and the liquid outlet socket 204 in the second direction, and the second connection confirmation socket 208 and the first connection confirmation socket 202 are spaced apart in the third direction. The first connection confirmation socket 202, the signal trigger socket 206, and the second connection confirmation socket 208 may be arranged in a row in the third direction. The second connection confirmation socket 208 is connected to a fourth connection confirmation circuit. The fourth connection confirmation circuit may be disposed on the on-vehicle connection socket 200, or may be disposed on the vehicle. For example, the fourth connection confirmation circuit may be integrated into the vehicle controller.

When the off-vehicle charger 100 is inserted into the on-vehicle connection socket 200, the second connection confirmation terminal 108 of the off-vehicle charger 100 may be electrically connected to the second connection confirmation socket 208 of the on-vehicle connection socket 200, so that the second connection confirmation circuit is connected to the fourth connection confirmation circuit. The second connection confirmation circuit and the fourth connection confirmation circuit form a second connection confirmation loop, to confirm a connection status between the charging plug 107 of the off-vehicle charger 100 and the charging socket 207 of the on-vehicle connection socket 200. When the second connection confirmation terminal 108 is electrically connected to the second connection confirmation socket 208, the second connection confirmation circuit and the fourth connection confirmation circuit form the second connection confirmation loop. The vehicle controller confirms that the charging plug 107 of the off-vehicle charger 100 is successfully connected to the charging socket 207 of the on-vehicle connection socket 200. In this case, the vehicle controller may make a response. Specifically, the vehicle controller may control a charging circuit of the battery of the vehicle to be connected, the vehicle controller may communicate with the charging device controller, and the charging device controller may control a charging circuit of the charging device to be connected, so that the charging device may transmit electric energy to the battery of the vehicle through the charging plug 107 and the charging socket 207 that are electrically connected to each other, and the charging device charges the battery of the vehicle.

In practice, in the first direction, the length of the first connection confirmation terminal 102 exposed from the first housing 101 and the length of the first connection confirmation socket 202 exposed from the second housing 201 are both L3, a length of the second connection confirmation terminal 108 exposed from the first housing 101 and a length of the second connection confirmation socket 208 exposed from the second housing 201 are both L1, and L1≤L3. Refer to FIG. 7 again. In FIG. 7, CC1 indicates the length of the second connection confirmation terminal 108 exposed from the first housing 101 or the length of the second connection confirmation socket 208 exposed from the second housing 201. As shown in FIG. 7, d1≥d3 (or d1'≥d3'), that is, L1≤L3 is shown.

In a process of inserting the off-vehicle charger 100 into the on-vehicle connection socket 200, there may be two connection cases of the connection confirmation terminal: the first connection confirmation terminal 102 is connected to the first connection confirmation socket 202 first, and the second connection confirmation terminal 108 is connected to the second connection confirmation socket 208 later; and the second connection confirmation terminal 108 is connected to the second connection confirmation socket 208 when the first connection confirmation terminal 102 is connected to the first connection confirmation socket 202. In the two connection cases, it can be ensured that the vehicle is charged in a case in which the coolant flows between the vehicle and the liquid cooling unit, so that the coolant can flow between the vehicle and the liquid cooling unit first, and the vehicle is powered on with the charging device later. This ensures that a heat dissipation requirement of battery supercharging of the vehicle can be met, and ensures safety and stability of supercharging.

In practice, in addition to the layout manner shown in FIG. 3, the first connection confirmation terminal 102, the signal trigger terminal 106, and the second connection confirmation terminal 108 may alternatively adopt another layout manner. For example, the first connection confirmation terminal 102, the signal trigger terminal 106, and the second connection confirmation terminal 108 may be arranged in a row in the second direction, or the first connection confirmation terminal 102, the signal trigger terminal 106, and the second connection confirmation terminal 108 may be arranged in a plurality of rows in the second direction and the third direction. The first connection confirmation socket 202, the signal trigger socket 206, and the second connection confirmation socket 208 may alternatively adopt other different layout manners. When the off-vehicle charger 100 is inserted into the on-vehicle connection socket 200, the first connection confirmation socket 202, the signal trigger socket 206, and the second connection confirmation socket 208 may be correspondingly electrically connected to the first connection confirmation terminal 102, the signal trigger terminal 106, and the second connection confirmation terminal 108 respectively.

In a possible implementation, a cooling pool may be provided in the off-vehicle charger 100, and the cooling pool may be in thermally conductive contact with the charging plug 107. Specifically, the cooling pool may be formed in the first housing 101. The thermally conductive contact herein may be direct contact or indirect contact. A cable electrically connected to the charging plug 107 may be disposed in the first housing 101, so that the charging plug 107 is electrically connected to the charging device. The cooling pool may also be in thermally conductive contact with the cable electrically connected to the charging plug 107.

The cooling pool has a liquid inlet interface and a liquid outlet interface. The liquid inlet interface and the liquid outlet interface may be separately provided at the second end of the first housing 101 in the first direction, and the liquid inlet interface and the liquid outlet interface are spaced apart in the second direction. The liquid inlet interface and the liquid outlet interface may separately communicate with the liquid cooling unit outside the vehicle through the pipeline. A projection of the cooling pool in the vertical direction (for example, the third direction) of the insertion direction may cover at least a part of the charging plug 107 and at least a part of the cable electrically connected to the charging plug 107, so that when the charging device charges the battery of the vehicle, the liquid cooling unit may dissipate heat for the cable.

In practice, a pipeline may be disposed in the first housing 101, and the pipeline is used as a cooling pool of the coolant. Two ends of the pipeline are respectively used as a liquid inlet interface and a liquid outlet interface. In the vertical direction of the insertion direction, a layout path of the pipeline may coincide with layout positions of at least a part of the charging plug 107 and at least a part of the cable electrically connected to the charging plug 107. Alternatively, a cavity may be formed in the first housing 101, and the cavity is used as a cooling pool of the coolant. The cavity has a liquid inlet interface and a liquid outlet interface. In the vertical direction of the insertion direction, the cavity may cover at least a part of the charging plug 107 and at least a part of the cable electrically connected to the charging plug 107. A plurality of cooling pools may be provided in the first housing 101. The plurality of cooling pools may share a liquid inlet interface and a liquid outlet interface. The plurality of cooling pools may be respectively provided corresponding to cables that are respectively electrically connected to the plurality of charging plugs 107, to respectively dissipate heat for different cables. For example, two cooling pools are provided in the first housing 101, and the two cooling pools are respectively provided corresponding to cables that are electrically connected to the positive electrode (DC+) and the negative electrode (DC-) of the off-vehicle charger 100. That is, the two cooling pools are respectively provided corresponding to a positive cable and a negative cable of the off-vehicle charger 100, to respectively dissipate heat for the positive cable and the negative cable.

In a possible implementation, the first end of the off-vehicle charger 100 may further include an auxiliary power plug, one end of the auxiliary power plug may be connected to an auxiliary power socket of the on-vehicle connection socket 200, and the other end of the auxiliary power plug may be connected to a low-voltage auxiliary power supply of the charging device. Correspondingly, the first end of the on-vehicle connection socket 200 may further include the auxiliary power socket, one end of the auxiliary power socket may be connected to the auxiliary power plug of the off-vehicle charger 100, and the other end of the auxiliary power socket may be connected to the battery management system of the vehicle. In practice, the low-voltage auxiliary power supply may be used to supply power to the battery management system.

The first end of the off-vehicle charger 100 may further include a communication plug, one end of the communication plug may be connected to a communication socket of the on-vehicle connection socket 200, and the other end of the communication plug may be connected to the charging device controller. Correspondingly, the first end of the on-vehicle connection socket 200 may further include the communication socket, one end of the communication socket may be connected to the communication plug of the off-vehicle charger 100, and the other end of the communication socket may be connected to the battery management system of the vehicle. In practice, after the communication plug is connected to the communication socket, the charging device controller may communicate with the battery management system of the vehicle.

An embodiment of this application further provides a liquid cooling apparatus. As shown in FIG. 1, the liquid cooling apparatus may include a liquid cooling unit 2 and the foregoing off-vehicle charger 100. In this case, the off-vehicle charger 100 may have only a function of coolant transmission, that is, the off-vehicle charger 100 may not be a composite charger, but only a liquid charger. The liquid cooling unit 2 is disposed outside a vehicle 1, or the liquid cooling unit 2 is disposed off a vehicle. For example, the liquid cooling unit 2 may be disposed in a place such as a charging station. The off-vehicle charger 100 may be connected to the liquid cooling unit 2, and may be further connected to a coolant pipeline of a battery management system of the vehicle 1 through an on-vehicle connection socket 200 or another on-vehicle connection structure. The off-vehicle charger 100 may be connected to the on-vehicle connection socket 200 in an insertion manner. In this way, when the vehicle 1 is charged, the liquid cooling unit 2 may communicate with the coolant pipeline of the battery management system for coolant transmission, so that the liquid cooling unit 2 assists the battery management system in heat dissipation of a battery of the vehicle 1. Specifically, after the liquid supply plug and the liquid return plug of the off-vehicle charger 100 are successfully connected to the on-vehicle connection socket, the liquid cooling unit may output a coolant to the battery management system of the vehicle through the liquid supply plug, to dissipate heat for the battery of the vehicle 1, and the liquid cooling unit may receive, through the liquid return plug, the coolant output by the battery management system. In this way, battery supercharging of the vehicle 1 can be implemented without upgrading and reconstructing the on-vehicle battery management system of the vehicle. This can reduce costs of upgrading and reconstructing the vehicle 1, and can also avoid redundancy of upgrading and reconstruction when the battery is not charged, thereby avoiding an increase in a weight of the entire vehicle 1 and energy consumption of the vehicle 1.

In practice, the liquid cooling unit may include a heat exchanger, a coolant tank, and a water pump, and the liquid supply plug and the liquid return plug communicate with at least one of the heat exchanger and the coolant tank through the pipeline. The coolant tank can accommodate the coolant. The heat exchanger can receive the coolant transmitted by the liquid return plug through the pipeline. The water pump can drive the coolant to flow between the liquid supply plug, the liquid return plug, the heat exchanger, and the coolant tank.

An embodiment of this application further provides a charging device. As shown in FIG. 1, the charging device may include a charging device such as a charging pile 4, a liquid cooling unit 2, a liquid cooling unit controller, a vehicle controller, and the foregoing off-vehicle charger 100. In this case, the off-vehicle charger 100 may have both a function of coolant transmission and a function of electric energy transmission. That is, the off-vehicle charger 100 is a composite charger. The charging pile 4 and the liquid cooling unit 2 may be disposed adjacently or integrated as a whole, to save off-vehicle layout space and facilitate centralized management and maintenance. The charging pile 4 may include a power module. When being connected to the liquid cooling unit 2, the off-vehicle charger 100 may be electrically connected to the power module of the charging pile 4. When an on-vehicle connection socket 200 is connected to a coolant pipeline of a battery management system of a vehicle 1, the on-vehicle connection socket 200 may be electrically connected to a battery of the vehicle 1. When the off-vehicle charger 100 is connected to the on-vehicle connection socket 200 in an insertion manner, the liquid cooling unit 2 may assist the battery management system in heat dissipation for the battery of the vehicle 1, and the charging pile 4 may be electrically connected to the battery of the vehicle 1, so that the charging pile 4 may charge the battery of the vehicle 1. Specifically, after the charging plug, the liquid supply plug, and the liquid return plug of the off-vehicle charger 100 are successfully connected to a composite connection socket or another on-vehicle connection structure, the power module may output a direct current to the battery of the vehicle through the charging plug, to charge the battery; the liquid cooling unit may output a coolant to the battery management system of the vehicle through the liquid supply plug, to dissipate heat for the battery; and the liquid cooling unit may receive, through the liquid return plug, the coolant output by the battery management system.

In practice, the liquid cooling unit controller and the vehicle controller may be communicatively connected to each other. For example, the liquid cooling unit controller and the vehicle controller may communicate with each other through a wireless module. When the first connection confirmation terminal 102 of the off-vehicle charger 100 is electrically connected to a first connection confirmation socket 202 of the on-vehicle connection socket 200, the liquid cooling unit controller controls the liquid cooling unit 2 to transmit the coolant to the off-vehicle charger 100, and the vehicle controller controls the coolant pipeline of the battery management system of the vehicle 1 to transmit the coolant to the on-vehicle connection socket 200. It can be learned from the foregoing description that, when the first connection confirmation terminal 102 of the off-vehicle charger 100 is electrically connected to the first connection confirmation socket 202 of the on-vehicle connection socket 200, the liquid supply plug 103 is connected to a liquid inlet socket 203, and the liquid return plug 104 is also connected to a liquid outlet socket 204. In this way, the coolant may be transmitted between the liquid cooling unit 2 and the battery management system of the vehicle 1, and the liquid cooling unit 2 may assist the battery management system in heat dissipation of the battery of the vehicle 1, to meet a heat dissipation requirement of battery supercharging of the vehicle 1. The charging pile 4 and the vehicle controller may communicate with each other through the wireless module or the like. When the second connection confirmation terminal 108 of the off-vehicle charger 100 is electrically connected to a second connection confirmation socket 208 of the on-vehicle connection socket 200, the charging plug 107 and a charging socket 207 are electrically connected to each other. In this way, electric energy can be transmitted between the charging pile 4 and the battery of the vehicle 1, so that the charging pile 4 charges the battery of the vehicle 1.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An off-vehicle charger, wherein the off-vehicle charger is configured to connect, in an insertion manner, to an on-vehicle connection socket disposed on a vehicle;
the off-vehicle charger comprises an insertion end, the insertion end is configured to be inserted into the on-vehicle connection socket in an insertion direction, the insertion end comprises a liquid supply plug and a liquid return plug, the liquid supply plug and the liquid return plug are connected to a liquid cooling unit through a pipeline, and the liquid cooling unit comprises a coolant;
the insertion end further comprises a first connection confirmation terminal, one end of the first connection confirmation terminal is configured to connect to a first connection confirmation socket of the on-vehicle connection socket, and the other end of the first connection confirmation terminal is configured to connect to a first connection confirmation circuit; and
when the first connection confirmation terminal is connected to the first connection confirmation socket, the first connection confirmation circuit and a connection confirmation circuit connected to the first connection confirmation socket form a first connection confirmation loop, and the first connection confirmation loop is configured to confirm a connection status between the liquid supply plug and the on-vehicle connection socket and a connection status between the liquid return plug and the on-vehicle connection socket.

2. The off-vehicle charger according to claim 1, wherein the liquid supply plug comprises a sleeve and a piston pipe, and the sleeve and the piston pipe are sleeved in the insertion direction;
the piston pipe is of a hollow tubular structure, a first end of the piston pipe comprises an opening, a second end of the piston pipe is closed, the first end of the piston pipe is configured to connect to the on-vehicle connection socket, a side wall of the piston pipe that is close to the second end of the piston pipe comprises a through hole, and the through hole is configured to communicate the pipeline with the piston pipe; and
the piston pipe and the sleeve are movable relative to each other in the insertion direction; and when the off-vehicle charger is not connected to the on-vehicle connection socket, the sleeve closes the through hole, to disconnect the communication between the pipeline and the piston pipe; or when the off-vehicle charger is connected to the on-vehicle connection socket, the sleeve avoids the through hole, to communicate the pipeline with the piston pipe.

3. The off-vehicle charger according to claim 1 or 2, wherein the off-vehicle charger further comprises a first housing, the first housing comprises a first end in the insertion direction, the first end of the first housing is configured to connect to the on-vehicle connection socket, and the liquid supply plug and the liquid return plug are separately disposed at the first end of the first housing;
the first end of the first housing comprises a first positioning through hole, and the first positioning through hole comprises a locking portion; and
when the off-vehicle charger is inserted into the on-vehicle connection socket, the locking portion extends into the on-vehicle connection socket from the first positioning through hole in a vertical direction of the insertion direction, to lock relative positions of the off-vehicle charger and the on-vehicle connection socket.

4. The off-vehicle charger according to any one of claims 1 to 3, wherein the off-vehicle charger further comprises an assisting handle structure, the assisting handle structure comprises a holding portion, a first connection portion, and a second connection portion, the first connection portion and the second connection portion are respectively connected to two ends of the holding portion, and the first connection portion and the second connection portion are respectively connected to two sides of the off-vehicle charger that are opposite to each other in a vertical direction of the insertion direction.

5. The off-vehicle charger according to any one of claims 1 to 4, wherein the vehicle is provided with an insertion auxiliary structure, the insertion auxiliary structure comprises a traction frame extending in the insertion direction and movable in the insertion direction, one end of the traction frame is movably connected to the vehicle, and the other end of the traction frame is provided with an abutting portion;
an outer wall of the off-vehicle charger comprises a protrusion, the protrusion is disposed close to the insertion end of the off-vehicle charger in the insertion direction, and a projection of the protrusion at least partially overlaps a projection of the abutting portion in the insertion direction; and
when the off-vehicle charger is connected to the on-vehicle connection socket and the off-vehicle charger is at a first position, the traction frame pulls the off-vehicle charger to move from the first position to a second position, so that the off-vehicle charger is completely connected to the on-vehicle connection socket.

6. The off-vehicle charger according to claim 5, wherein the off-vehicle charger further comprises a signal trigger terminal, the signal trigger terminal is disposed at the insertion end of the off-vehicle charger, and when the off-vehicle charger is at the first position, the signal trigger terminal is electrically connected to a signal trigger terminal of the on-vehicle connection socket; and
in response to the signal trigger terminal being electrically connected to the signal trigger terminal of the on-vehicle connection socket, the traction frame pulls the off-vehicle charger to move from the first position to the second position, so that the off-vehicle charger is successfully connected to the on-vehicle connection socket.

7. The off-vehicle charger according to claim 6, wherein the first connection confirmation terminal and the signal trigger terminal are separately located between the liquid supply plug and the liquid return plug in a vertical direction of the insertion direction; and
the first connection confirmation terminal and the signal trigger terminal are spaced apart in a vertical direction of the insertion direction.

8. The off-vehicle charger according to claim 6 or 7, wherein a length of the first connection confirmation terminal exposed from the insertion end of the off-vehicle charger in the insertion direction is L3, a length of the signal trigger terminal exposed from the insertion end of the off-vehicle charger in the insertion direction is L2, and L3<L2; and
when the off-vehicle charger is at the first position, the signal trigger terminal is electrically connected to the signal trigger terminal of the on-vehicle connection socket; and when the off-vehicle charger is at the second position, the first connection confirmation terminal is electrically connected to a connection confirmation terminal of the on-vehicle connection socket.

9. An on-vehicle connection socket, wherein the on-vehicle connection socket is configured to connect to an off-vehicle charger outside a vehicle in an insertion manner;
the on-vehicle connection socket comprises an insertion end, the insertion end is configured to be inserted into the off-vehicle charger in an insertion direction, the insertion end comprises a liquid inlet socket and a liquid outlet socket, the liquid inlet socket and the liquid outlet socket are connected to a coolant pipeline of a battery management system of the vehicle through a pipeline, and the coolant pipeline of the battery management system comprises a coolant;
the insertion end further comprises a first connection confirmation socket, one end of the first connection confirmation socket is configured to connect to a first connection confirmation terminal of the off-vehicle charger, and the other end of the first connection confirmation socket is configured to connect to a third connection confirmation circuit; and
when the first connection confirmation terminal is connected to the first connection confirmation socket, the third connection confirmation circuit and a connection confirmation circuit connected to the first connection confirmation terminal form a first connection confirmation loop, and the first connection confirmation loop is configured to confirm a connection status between the liquid inlet socket and the off-vehicle charger and a connection status between the liquid outlet socket and the off-vehicle charger.

10. The on-vehicle connection socket according to claim 9, wherein the liquid inlet socket comprises a sleeve and a piston pipe, and the sleeve and the piston pipe are sleeved in the insertion direction;
the piston pipe is of a hollow tubular structure, a first end of the piston pipe comprises an opening, a second end of the piston pipe is closed, the first end of the piston pipe is configured to connect to the off-vehicle charger, a side wall of the piston pipe that is close to the second end of the piston pipe comprises a through hole, and the through hole is configured to communicate the pipeline with the piston pipe; and
the piston pipe and the sleeve are movable relative to each other in the insertion direction; and when the off-vehicle charger is not connected to the on-vehicle connection socket, the sleeve closes the through hole, to disconnect the communication between the pipeline and the piston pipe; or when the off-vehicle charger is connected to the on-vehicle connection socket, the sleeve avoids the through hole, to communicate the pipeline with the piston pipe.

11. The on-vehicle connection socket according to claim 9 or 10, wherein the on-vehicle connection socket further comprises a second housing, the second housing comprises a first end in the insertion direction, the first end of the second housing is configured to connect to the off-vehicle charger, and the liquid inlet socket and the liquid outlet socket are separately disposed at the first end of the second housing;
the first end of the second housing comprises a second positioning through hole, and the second positioning through hole comprises a locking portion; and
when the off-vehicle charger is inserted into the on-vehicle connection socket, the locking portion extends into the off-vehicle charger from the second positioning through hole in a vertical direction of the insertion direction, to lock relative positions of the off-vehicle charger and the on-vehicle connection socket.

12. A liquid cooling apparatus, comprising a liquid cooling unit and the off-vehicle charger according to any one of claims 1 to 8, wherein the off-vehicle charger is configured to be inserted into an on-vehicle connection socket, and the liquid supply plug and the liquid return plug are connected to the liquid cooling unit through the pipeline; and
after the liquid supply plug and the liquid return plug are successfully connected to the on-vehicle connection socket, the liquid cooling unit is configured to output a coolant to a battery management system of the vehicle through the liquid supply plug, to dissipate heat for a battery of the vehicle, and the liquid cooling unit is configured to receive, through the liquid return plug, the coolant output by the battery management system.

13. The liquid cooling apparatus according to claim 12, wherein the liquid cooling unit comprises a heat exchanger, a coolant tank, and a water pump, and the liquid supply plug and the liquid return plug communicate with at least one of the heat exchanger and the coolant tank through the pipeline;
the coolant tank is configured to accommodate the coolant;
the heat exchanger is configured to receive the coolant transmitted by the liquid return plug through the pipeline; and
the water pump is configured to drive the coolant to flow between the liquid supply plug, the liquid return plug, the heat exchanger, and the coolant tank.
